# EUROPEAN PATENT APPLICATION

(11) **EP 3 502 865 A1**
(43) Date of publication of application: **26.06.2019**
(21) Application number: 18000976.3
(22) Date of filing: 17.12.2018
(51) Int. Cl.: G06F 3/16

(54) **HOUSEHOLD APPLIANCE AND METHOD FOR OPERATING THE HOUSEHOLD APPLIANCE**

(30) Priority: 21.12.2017 CN 201711389109
(71) Applicant: Diehl AKO Stiftung & Co. KG, 88239 Wangen (DE)
(72) Inventor: Zhongke, Li, Nanjing, CN - 211100 (CN)
(74) Representative: Diehl Patentabteilung

(57) **Abstract**

The present invention relates to a household appliance equipped with a speech control system. The speech control system includes: a speech acquisition module configured to acquire a speech input signal, wherein the speech input signal includes a statement of an objective fact of an object to be treated; a speech recognition module configured to recognize information of one or more objects to be treated from the speech input signal; and a control module for determining a mode and/or a parameter for operating the household appliance based on the recognized information of one or more objects to be treated. In addition, the present invention also relates to a method for operating the household appliance and a computer-readable storage medium.

## Description

### TECHNICAL FIELD

The present invention relates to the technical field of household appliances. More specifically, the present invention relates to household appliances equipped with speech control systems, methods for operating the household appliances, and computer-readable storage media.

### BACKGROUND ART

Various household appliances, such as a washing machine, a drying machine, a washer-dryer, a dishwasher, a coffee machine or an oven currently on the market, are mainly operated by means of buttons. With the ever-increasing functions of the household appliances, more and more buttons are provided on the household appliances, making it very cumbersome to operate by a user. Only when the user has professional knowledge in a related field and has a thorough understanding of the complex instructions of the household appliances, can he/she operate the household appliances well, which results in a poor user experience.

Taking a washing machine as an example, the user usually needs to select a washing mode and parameters such as a temperature, a water level, a dewatering rotation speed, washing time, rinsing times and the like, and also needs to determine and dispense an appropriate amount of detergent or washing powder. In this process, the user needs to have some professional knowledge in washing and make a series of selections or decisions, complicating the entire washing process. Some users may even choose a wrong mode or parameter due to lack of knowledge in washing, thereby leading to poor washing effect or even a damage to laundry.

In response to the above-mentioned problems, such solutions as following are available in the art to make the washing machine intelligent:
Recognition of laundries: a common means at present is RFID tag recognition. Specifically, an RFID tag reader is installed on the washing machine, and it is required that each of the laundries be provided with a tag. When the tagged laundries are put in, the washing machine can automatically recognize the number and type of the laundries in the barrel so that it can automatically determine a most suitable washing mode. However, this solution is almost infeasible at present, because the commercially available clothes rarely have an RFID tag and it will be a huge workload for the user to install an RFID tag for each of the clothes, and wearing comfort may be affected with the presence of the tag. In addition, no reliable technical process has been present for recognition of laundries.

Special modes: Such modes as "mixed wash", "fast wash" and the like, are usually unable to meet all of the demands and may sacrifice some performances. There are also some special modes, such as "4S cool wash", "JIING MENG wash" and the like, which are obscure to the user if he/she do not carefully read the instructions, resulting in a poor user experience.

Speech Recognition Technology: a common way at present is allowing the user to control operation of the washing machine directly by saying a "control command". This solution is disadvantageous in that: the user still need to "select or determine" which control command is needed before saying a washing mode and the selected parameter such as a temperature, a water level, a dewatering rotation speed, washing time and rinsing times to the washing machine, so that the user still need professional knowledge in washing and a thorough understanding of the complex instructions. It can be seen that such technical solutions in the prior art merely replace the current step-by-step button operation with a step-by-step speech control command without bringing obvious convenience. Therefore, the user experience has not been improved substantially; instead, this aggravates the cumbersomeness of the entire operation process.

### SUMMARY OF THE INVENTION

An objective of the present invention is to achieve a more simple, intelligent and efficient human-computer interaction with household appliances.

According to a first aspect of the present invention, the objective is achieved by a household appliance equipped with a speech control system. The speech control system includes: a speech acquisition module configured to acquire a speech input signal, wherein the speech input signal includes a statement of an objective fact of an object to be treated; a speech recognition module configured to recognize information of one or more objects to be treated from the speech input signal; and a control module for determining a mode and/or parameter for operating the household appliance based on the recognized information of one or more objects to be treated.

In some embodiments, the speech acquisition module may be, for example, a microphone or a speech acquisition chip. The speech input signal of a user may be acquired and transmitted to the speech recognition module by the speech acquisition module. Then, the speech recognition module extracts information of one or more objects to be treated from the objective fact stated by the user and transmits the information to the control module. Here, the speech recognition module may recognize a natural language signal, convert it into text information, and provide information of one or more objects to be treated therefrom. The information of one or more objects to be treated is then transmitted to the control module,

The control module analyzes the received information of one or more objects to be treated and determines a mode and/or parameter for operating the household appliance based on the analysis result. The mode and/or parameter determined matches the objective facts stated by the user, and is preferably an optimized mode and/or parameter. That is to say, the mode and/or parameter determined has the objective facts stated by the user taken into comprehensive account, and the mode and/or parameter which matches the objective facts can be determined intelligently. Here, the user only needs to state the objective facts of the objects to be treated by natural language, i.e. being free from decision-making, and the decision process is handed over to the speech control system. It is possible that the user himself/herself may not know which mode and/or parameter may well match the objective facts of the objects to be treated. Therefore, the user is free from the complicated configuration-selecting process, no longer needs professional knowledge for treatment, and does not need to read complex instructions any more. As an optimized mode and/or parameter, the mode and/or parameter obtained by the present invention has the objective facts of the objects to be treated taken into comprehensive account, so that the mode and/or parameter determined matches the objective facts and/or user's requirements, thereby improving the treating effect of the objects to be treated as well as the user experience.

In some embodiments, the information of the object to be treated may include, for example, at least one of the following information: a type of the object to be treated, a material of the object to be treated, a color of the object to be treated, a fading difficulty of the object to be treated, the number of the object to be treated, the mass of the object to be treated, a dirty degree of the object to be treated, a requirement for treating the object to be treated, etc.

In some embodiments, the speech control system may, for example, be integrated on the household appliance as a whole. The speech control system is preferably integrated on a central control unit of the household appliance.

In some embodiments, at least one module of the speech acquisition module, the speech recognition module, and the control module may also be provided separately from the household appliance. Preferably, the separate module may be, for example, disposed on a smart device, such as a smart phone, a tablet and a computer. It is possible that the speech acquisition module and the speech recognition module are disposed on a smart device (a smart phone, a tablet, etc.), and the household appliance is equipped with a communication module (such as a Wifi or a Bluetooth module) which may be communicated with the smart device. As such, the user can operate the household appliance, for example, by making a factual statement directly to the smart device. The specific implementation process may be, for example, as follows: the user makes a "speech input" for the smart device to state the objective fact of the object to be treated; the smart device may recognize the information of one or more objects to be treated online (for example, in the cloud) or offline, convert it into machine language and transmit it to the control module in the household appliance via the communication module; and the control module may determine an optimized mode and/or parameter through the above-described comprehensive analysis and then start operation. Of course, the control module may also be integrated on the smart device together with the speech acquisition module and the speech recognition module.

In some embodiments, the speech acquisition module, the speech recognition module and the control module may communicate with each other in a wireless (for example, Wifi or Bluetooth) and/or a wired manner.

In some embodiments, the speech recognition module and/or the control module may be, for example, online or offline. When the speech recognition module and/or the control module are configured to be offline, remote communication and the related configuration process may be avoided, and accordingly the application of the household appliance may not be limited by the presence of network. However, when the speech recognition module and/or the control module are configured to be online, a more accurate recognition result and a more optimized mode and/or parameter can be provided through a remote server or a cloud based on their powerful data processing capabilities, and expensive electronic components may also be omitted from the household appliance.

In accordance with the present invention, the household appliance may be, for example, a washing machine, a drying machine, a washer-dryer, a dishwasher, a coffee machine, an oven or the like. The solution according to the present invention is particularly suitable for such devices which require complex mode and/or parameter configurations. The application field of the present - invention should not be limited to the household appliances as listed above, and may also be applied to other types of household appliances according to actual conditions.

In some embodiments, the household appliance is a washing machine (of course, a drying machine and a washer-dryer are also like this). In this case, the information of one or more objects to be treated includes at least one of the following: a type of a laundry, a material of a laundry, a dirty degree of a laundry, a color of a laundry, a fading difficulty of a laundry, the number of laundries and a requirement for washing a laundry, wherein the requirement for washing a laundry preferably includes at least one of the following: a washing duration, a washing start time, a washing end time, a running quietness degree, and a laundry disinfection degree. The parameters include at least one of the following: a detergent dosage, a softener dosage, a water temperature, a washing rotation speed, a dewatering rotation speed, a water consumption (water level), rinsing times. The modes include at least one of the following: a standard mode, a soft mode, a fast wash mode, a quiet mode, an infant mode, a disinfection mode, a night mode, a mixed mode, a power mode, a rinse mode, a dewatering mode, and a soaking mode. Of course, the information, requirement, parameters, and modes involved in the present invention should not be limited to the above, and other information, requirements, parameters, modes, and the like may also be used according to actual conditions.

In some embodiments, the speech control system determines the detergent and/or softer dosage and/or the washing time and/or the water temperature according to the dirty degree of a laundry and/or the material of a laundry and/or the color of a laundry and/or the type of a laundry and/or the number of laundries. In the prior art, a turbidity sensor and a quantitative detergent dispenser may be installed in the washing machine, in which a standard amount of detergent is put in the washing machine before washing starts, the proportion of suspended matters in washing water is detected continually during the washing process to recognize the dirty degree of a laundry, and if it is found that the proportion of the suspended matters in washing water is high, a certain amount of detergent is added. However, this solution is disadvantageous in that: the turbidity sensor in the prior art is very inaccurate; as the turbidity sensor is mainly used to detect the dirty degree of water, which cannot reflect reliably the actual dirty degree of the laundry (for example, in case of fading), the amount of detergent dispensed may be too small sometimes to result in that the laundry cannot be washed clean, or the amount of detergent dispensed may be too large sometimes to result in difficult rinsing and excessive detergent ingredients remaining on the laundry. In accordance with the present invention, the speech control system determines the mode and/or parameter for operating the washing machine based on the dirty degree of the laundry recognized. Since the dirty degree of the laundry is generally known to the user, the turbidity sensor in the prior art may be omitted to result in a reduction in costs, and further the problem of too little or too much detergent caused by the inaccurate turbidity sensor in the prior art may be avoided.

In some embodiments, the speech control system determines the water temperature according to the dirty degree of a laundry and/or the material of a laundry and/or the fading difficulty of a laundry and/or the color of a laundry. It is also possible that the speech control system determines the detergent dosage and/or the washing time and/or the water consumption (water level) according to the dirty degree of a laundry and/or the material of a laundry and/or the number of laundries. The speech control system determines the dewatering rotation speed based on the material of a laundry.

In some embodiments, the speech control system sets the washing duration and/or the washing start time and/or the washing end time according to the recognized requirement for washing a laundry. The requirement for washing a laundry may be stated, for example, by the user in natural language: the washing duration, the washing start time (i.e., reserving a washing start time), the washing end time (i.e., reserving a washing end time), the running quietness degree, the laundry disinfection degree, and the like. It is very advantageous to well recognize and take into account the user's requirements, because the reserving functions of the washing machines from different manufacturers are mainly divided into two categories at present, in one of which washing starts when the predetermined time reaches, and in the other of which washing finishes when the predetermined time reaches. Accordingly, the user may often be confused with such regulations, for example, the following instance may occur: for example, the user actually needs to finish washing before 8 o'clock in the morning, but as a result, washing starts at 8 o'clock; or the user actually needs to start washing at 8 o'clock in the morning, but the washing machine starts running at 7 o'clock. Both of these two instances may give the user a very poor experience. However, this can be well solved by the embodiments according to the present invention, the user no longer needs to understand and remember the manufacturer's regulations, and thus human-computer interaction is more intelligent and the user experience is accordingly improved.

In some embodiments, the user can operate the washing machine by direct speech input of the relevant operation instructions, in which the operation instructions may involve, for example, adding laundry midway, stand-by, wake-up, opening the door, closing the door, power-off, power-on, starting wash, pausing wash, finishing wash, fast wash, rinsing, and dewatering.

In some embodiments, the household appliance may make a confirmation or give a feedback by means of acoustic (e.g., speech output or voice output) and/or optical (e.g., icon, light indication) signals.

In some embodiments, when the user inputs only part of the information or only part of the information can be recognized from the speech input signals, that is, in the case where the information recognized is incomplete, the washing machine can still determine the mode and/or parameter for operating the household appliance, i.e. the washing machine runs in accordance with the pre-stored mode and/or parameter based on the analysis of the information recognized.

In some embodiments, the household appliance is an oven. In this case, the recognized information of one or more objects to be treated includes at least one of the following: a type of food, the number of food, a size of food, the mass of food, a thickness of food, and a requirement for baking of food. The parameters include at least one of the following: an upper fire temperature, a lower fire temperature, a wind speed, an upper roasting time, a lower roasting time, a fork's rotation speed, a humidity, and a steam temperature. The modes include at least one of the following: a fast heat mode, a defrosting mode, a fermentation mode, a wind baking mode, a fan baking mode, a baking mode, a grilling mode, a bottom heating mode, a strong grilling mode, and a steam mode.

According to a second aspect of the present invention, the objective is solved by a method for operating the household appliance according to the present invention. The method comprises the steps of: acquiring a speech input signal, wherein the speech input signal includes a statement of an objective fact of an object to be treated; recognizing information of one or more objects to be treated from the speech input signal; and determining a mode and/or parameter for operating the household appliance based on the recognized information of one or more objects to be treated. The speech recognition module extracts information of one or more objects to be treated from the objective facts stated by the user and transmits the information to the control module. The control module analyzes comprehensively the received information and determines the optimized mode and/or parameter for operating the household appliance. Here, the user only needs to state the objective fact of an object to be treated by natural language, and the decision process is handed over to the speech control system. Therefore, the user is free from the complex configuration-selecting process, no longer needs professional knowledge for treatment, and does not need to read complex instructions any more. As an optimized mode and/or parameter, the mode and/or parameter obtained by the present invention has the objective facts of objects to be treated taken into comprehensive account, so that the mode and/or parameter determined matches the objective facts, thereby improving the treating effect of the objects to be treated as well as the user experience.

According to a third aspect of the present invention, the objective is solved by a computer-readable storage medium. The computer-readable storage medium has computer-readable instructions, wherein the method according to the present invention can be implemented when the computer-readable instructions are executed on one or more computers.

### BRIEF DESCRIPTION OF THE DRAWINGS

Drawings explained here are used to provide further understanding of the present invention, which constitute a portion of the present application. The schematic embodiments and description of the present invention are only used for explaining the present invention, and do not constitute improper delimitations of the present invention.
FIG. 1 shows a schematic block diagram of a speech recognition system according to the present invention;
FIG. 2 shows a first schematic block diagram of a household appliance according to the present invention;
FIG. 3 shows an operational flowchart of the household appliance according to the present invention;
FIG. 4 shows a flow chart of a method for operating the household appliance according to the present invention;
FIG. 5 shows an operational flowchart of the household appliance according to the present invention;
FIG. 6 shows a second schematic block diagram of the household appliance according to the present invention;
FIG. 7 shows a third schematic block diagram of the household appliance according to the present invention;
FIG. 8 shows an operational flowchart of the household appliance according to the present invention;

### EMBODIMENTS

The present invention will be described below with reference to the drawings, in which several embodiments of the present invention are shown. It should be understood, however, that the present invention may be implemented in many different ways, and is not limited to the example embodiments described below. In fact, the embodiments described hereinafter are intended to make a more complete disclosure of the present invention and to adequately explain the scope of the present invention to a person skilled in the art. It should also be understood that, the embodiments disclosed herein can be combined in various ways to provide many additional embodiments.

It should be understood that, the wording in the specification is only used for describing particular embodiments and is not intended to limit the present invention. All the terms used in the specification (including technical and scientific terms) have the meanings as normally understood by a person skilled in the art, unless otherwise defined. For the sake of conciseness and/or clarity, well-known functions or constructions may not be described in detail.

The singular forms "a/an" and "the" as used in the specification, unless clearly indicated, all contain the plural forms. The words "comprising", "containing" and "including" used in the specification indicate the presence of the claimed features, but do not preclude the presence of one or more additional features. The wording "and/or" as used in the specification includes any and all combinations of one or more of the relevant items listed.

The system described in the specification may also utilize one or more controllers to receive information and transform the received information to generate an output. The controller may include any type of computing means, a calculation circuit or any type of processor or a processing circuit capable of executing a series of instructions stored in the memory. The controller may comprise a plurality of processors and/or a multi-core central processing unit (CPU) and may comprise any type of processor, such as a microprocessor, a digital signal processor, a microcontroller, and the like. The controller may further comprise a memory to store data and/or algorithms to execute a series of instructions.

Any method, mode, algorithm, or code described in the specification may be converted or expressed as a programming language or a computer mode. "Programming Language" and "Computer Mode" are any language used to assign instructions to a computer and include (but are not limited to) these languages and their derivatives: Assembly Language, Basic, Batch File, BCPL, C, C +, C++, Delphi, Fortran, Java, JavaScript, machine code, Operating System Command Language, Pascal, Perl, PL1, scripting language, Visual Basic, its own specified mode meta-language, as well as the first generation, second generation, third generation, fourth generation and fifth generation of computer languages. Also included are databases and other data modes, as well as any other metalanguage. For the purposes of this definition, no distinction is made between languages that are interpreted, compiled, or languages that use such two methods as compilation and interpretation. For the purposes of this definition, no distinction is made between a compiled version and a source version of a mode. Thus, a mode in which a reference programming language may exist in more than one state (such as a source state, a compiled state, an object state, or a linked state), refers to any of and all of such states. This definition also contains effective instructions and intensions of such instructions.

Any method, mode, algorithm, or code described in the specification may be contained on one or more machine-readable media or memories. The term "memory" may include a mechanism that provides (e.g., stores and/or transmits) information in a format readable by a machine such as a processor, a computer, or a digital processing device. For instance, the memory may include a read only memory (ROM), a random access memory (RAM), a disk storage medium, an optical storage medium, a flash memory device, or any other volatile or nonvolatile memory devices. The codes or instructions contained thereon may be represented by a carrier signal, an infrared signal, a digital signal, and other similar signals.

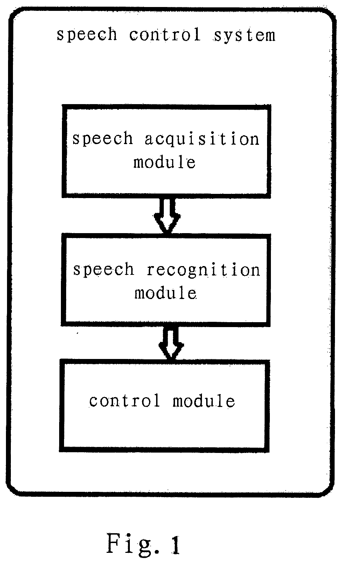

The present invention will now be illustrated in conjunction with the figures. FIG. 1 shows a schematic block diagram of a speech recognition system according to the present invention. As shown, the speech recognition system includes a speech acquisition module, a speech recognition module, and a control module.

The speech acquisition module may be, for example, a microphone or a speech acquisition chip. The speech input signal of the user may be acquired by the speech acquisition module.

The speech recognition module extracts information of one or more objects to be treated from the objective facts stated by the user. Here, the speech recognition module may recognize a natural language signal, convert it into machine language, and provide information of one or more objects to be treated therefrom.

The control module analyzes comprehensively the received information of one or more objects to be treated and determines an optimized mode and/or parameter for operating the household appliance.

The signal flow between the individual modules in the speech recognition system can be seen from FIG. 1 (shown by one-way arrows). The speech input signal acquired by the speech acquisition module is transmitted to the speech recognition module, wherein the speech input signal includes a statement of an objective fact of an object to be treated; information of one or more objects to be treated is recognized from the speech input signal by the speech recognition module; the recognized information of one or more objects to be treated is then transmitted to the control module for determination of a mode and/or parameter for operating the household appliance.

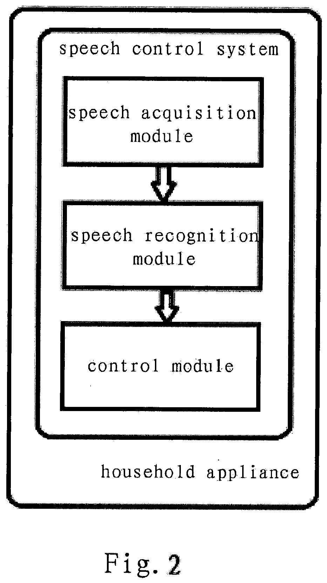

FIG. 2 shows a first schematic block diagram of a household appliance equipped with a speech control system according to the present invention. The entire speech control system shown in FIG. 2 is integrated in the household appliance. Here, the speech control system may be integrated, for example, in a central control unit of the household appliance that is placed on a printed circuit board or may be connected to the central control unit. Finally, the household appliance is operated according to the mode and/or parameter determined.

For the purpose of better illustration, the washing machine will be taken as an example. Of course, the present invention is not limited to the application of the washing machine, but may be applied to various household appliances depending on actual conditions.

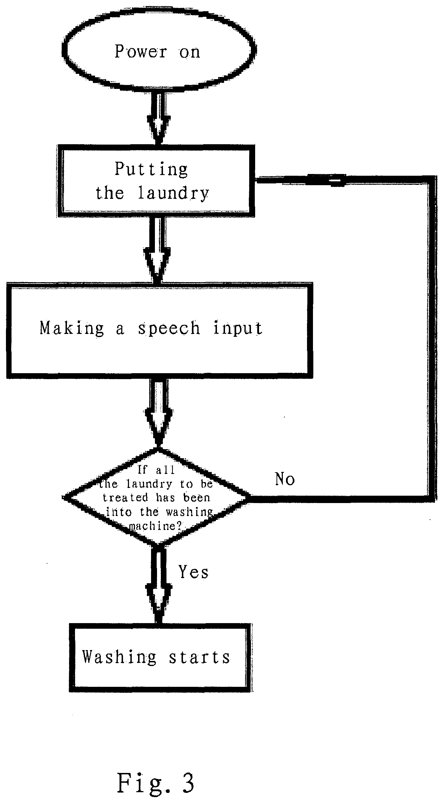

Fig. 3 shows an operational flowchart of the household appliance according to the present invention in the case that the household appliance is a washing machine. First, the washing machine is powered on. Next, the user puts the laundry into the washing machine and makes a speech input; specifically, the user makes a statement of an objective fact of an object to be treated here. The information of one or more objects to be treated includes at least one of the following: a type of the laundry, a material of the laundry, a dirty degree of the laundry, a color of the laundry, a fading difficulty of the laundry, the number of the laundry, and a requirement for washing the laundry, wherein the requirement for washing the laundry preferably includes at least one of the following: a washing duration, a washing start time, a washing end time, a running quietness degree, and a laundry disinfection degree. By the invention, the mode and/or parameter for operating the household appliance, that is the washing machine, can be determined according to the information of one or more objects to be treated. In this way, the household appliance, i.e. the washing machine, can perform washing based on the mode and/or parameter determined.

According to the present invention, the user does not need to think about or select the washing mode and parameter throughout the process, and only needs to state the facts of the laundry to be washed. Thus, the user is free from the complex configuration-selecting process, no longer needs professional knowledge for treatment, and does not need to read complex instructions any more. As an optimized mode and/or parameter, the mode and/or parameter obtained by the present invention has the objective facts of the object to be treated taken into comprehensive account, so that the mode and/or parameter determined matches the objective facts and/or user's requirements, thereby improving the treating effect of the object to be treated as well as the user experience.

According to the present invention, when the user inputs only part of the information or only part of the information is recognized from the speech input signal, that is, in the case where the information recognized is incomplete, the washing machine can still determine the mode and/or parameter for operating the household appliance, that is, the washing machine runs in accordance with the pre-stored mode and/or parameter based on the analysis of the information recognized.

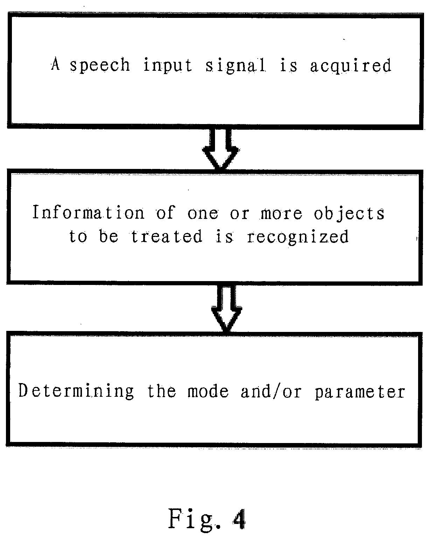

FIG. 4 is a method for operating the household appliance according to the present invention, in which the household appliance here is exemplarily a washing machine. Firstly, a speech input signal is acquired, that is, a statement of an objective fact of an object to be treated made by the user is acquired by means of a microphone or a speech acquisition chip; then information of one or more objects to be treated is recognized from the statement, that is, the "information of the laundry" inputted by the user orally needs to be recognized in this process and converted into machine language to be "told" to the control module of the washing machine; then the control module automatically determines, according to the received information of the laundry (including a type, a material, a color thereof, etc.), the initial washing mode and/or parameter for operating the washing machine.

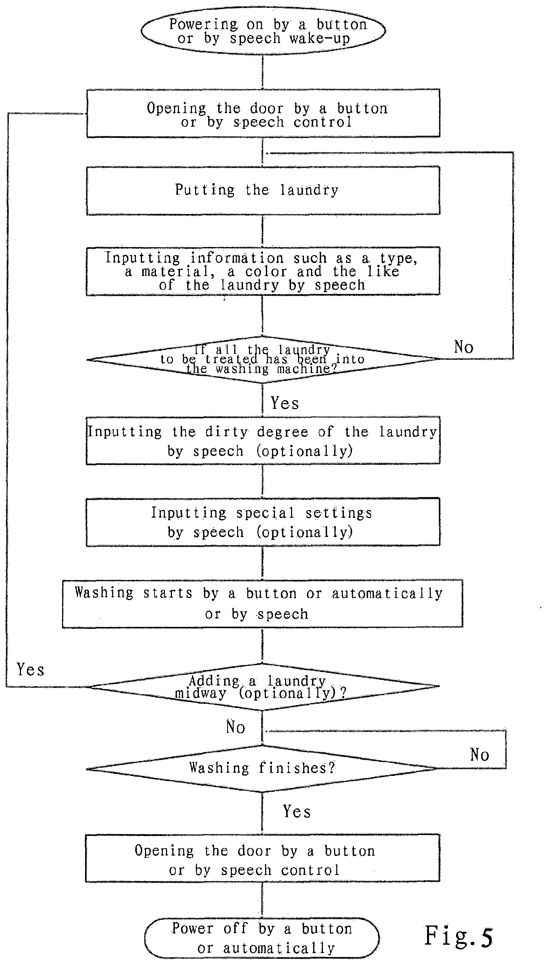

FIG. 5 is a more detailed operational flowchart of the household appliance according to the present invention, in which the household appliance here is exemplarily a washing machine. As shown, the method includes the steps of:
- Powering the washing machine on by means of a button or by speech wake-up;
   Here, the user may select to power the washing machine on by means of a button or by speech wake-up. In the case of "speech wake-up", a speech wake-up signal, e.g. a simple speech of "Power on" from the user, may be acquired by a speech acquisition module such as a microphone provided in the washing machine; then the speech acquisition module transmits the speech wake-up signal to the speech recognition module, which recognizes "speech wakeup information" based on related algorithm and sends it to the control module; and the control module determines a corresponding mode or parameter based on the "speech wakeup information" recognized, so that the washing machine is woken up from the standby mode.
- Opening the door by means of a button or by speech control;
   Here, the user may select to open the door by means of a button or to "open the door by speech" (for example, requesting the washing machine to "open the door" by speaking). This step is similar to the step of powering the washing machine on, and thus will not be described in detail here.
- Inputting information such as a type, a material, a color and the like of the laundry by speech;
   Similar to the flow shown in FIG. 3, the laundry is recognized by "Speech Recognition Technology". Here, the user puts the laundry in the washing machine and states "information of the laundry". While putting the laundry into the washing machine, the user tells the washing machine the type and/or material and/or color of the laundry by speaking. If there are multiple laundries, the user "describes" each of them to the washing machine in order (for example, while putting the laundries in the washing machine, the user says that there are a red wool sweater, a white cotton shirt and a pink jacket. By such simple language input, the washing machine can recognize all the information needed). It is of course also possible that the type and/or material and/or color or the like of each laundry is told to the washing machine by speaking before or after all the laundries to be washed are put into the washing machine. The speech acquisition module of the washing machine acquires the "information of the laundry" said by the user, the speech recognition module recognizes the "information of the laundry" inputted by the user orally and converts it into machine language to be told to the control module of the washing machine, and the control module automatically determines, according to the received information of the laundry (including the type, the material, the color thereof, etc.), the initial washing mode and/or parameter. The user does not need to think about or select the washing modes and parameter throughout the process, and only needs to state the facts of the laundry to be washed. Here, the control module undertakes the task of analysis and decision-making. For example, if a wool sweater is present, the "soft wash mode" may be selected, the temperature may be controlled below a certain temperature and the dewatering rotation speed may be set at a low level so as to avoid damage to the sweater; if there is a laundry easy to fade, the temperature may be set at a low level; the detergent dispenser may be adjusted according to the number and/or material of the laundries so that a suitable amount of detergent is dispensed.
- Inputting the dirty degree of the laundry by speech (optionally);
   The dirty degree of the laundry can be recognized by "Speech Recognition Technology". Optionally, "the dirty degree of the laundry" may be stated during putting of the laundry by the user. For example, at the time of or after putting the laundry into the washing machine, the user orally "tells" the washing machine the dirty degree of the laundry. The washing machine recognizes by means of the speech recognition module the user's speech input information (e.g., being not dirty, less dirty, a little dirty, very dirty, extremely dirty, etc.), converts it fuzzily into the dirty degree of the laundry, and transmits it to the control module, which determines an optimized mode and/or parameter based on the dirty degree of the laundry additionally. For example, if the user say "there are a red wool sweater, a white cotton shirt and a pink jacket, and it is less dirty" while putting the laundry into the washing machine, the control module may select the "soft wash mode" and put a small amount of detergent (such as 60% of the standard value) according to the number, material and dirty degree of the laundries inputted by speech.
- Inputting special settings by speech (optionally);
   Special requirements can be set quickly by "Speech Recognition Technology", e.g., setting the washing duration, reserving the washing start or end time, requesting quiet wash at night, requiring infants' clothes to be boiled and disinfected, etc. If the user "tells" the washing machine by speech that there is a need for fast wash or the laundry needs to be finished washing within one hour, the washing machine may take into account the user's requirement of "the laundry be finished washing within one hour" on the basis of the number, material, color, dirty degree and the like of the laundry obtained previously, and figure out a balanced parameter between the washing cleanness and the washing duration. For example, in the case where the user says that "there are a red wool sweater, a white cotton shirt and a pink jacket, it is a little dirty, and washing needs to be finished within 45 minutes" while putting the laundries into the washing machine, if the control module of the washing machine makes an evaluation that this requirement is feasible, the control module may give a feedback, e.g. outputting a speech signal of "OK"; and if the control module of the washing machine makes an evaluation that it shall take at least one hour to finish washing, the control module may also give a suggestion, e.g. outputting a speech that "at least one hour is required; do you want to start?". For example, if the user says that "Finish washing at 6 o'clock tomorrow morning, and be quiet", the control module of the washing machine may calculate the total washing duration based on the information of the laundries, automatically calculate the washing start time, and with the demand for "quietness" taken into consideration, automatically reduce the dewatering rotation speed and prolong the dewatering time to thereby meet the requirements for both "quietness" and "cleanness".
- Adding a laundry midway (optionally);
   Here, the user may select to "add a laundry midway" by speech input (for example, telling the washing machine by speaking "adding a laundry midway or more laundries need to be added"), and details will not be described herein. It should be emphasized that in the prior art, in order to achieve addition of a laundry midway, buttons need to be pressed multiple times before and after addition of the laundry; however, speech input is enough for the present invention to achieve addition of a laundry midway, thereby making the operation simple and intelligent.

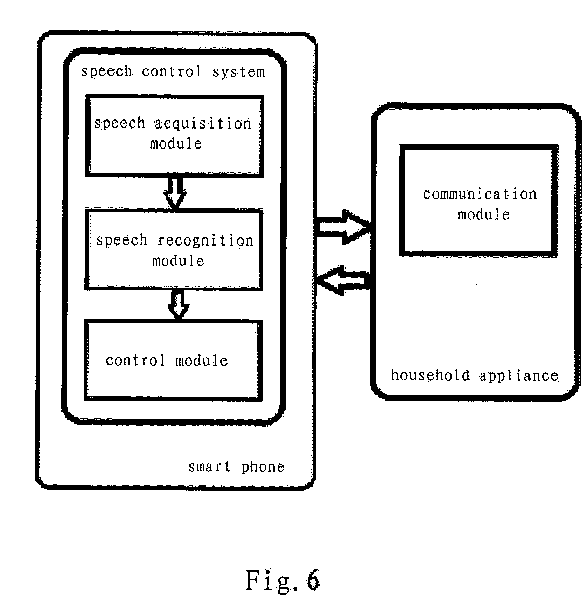

Next, the present invention will be described in detail with reference to FIGS. 6, 7, and 8. FIG. 6 shows a second schematic block diagram of the household appliance according to the present invention. As can be seen from FIG. 6, the speech recognition system including the speech acquisition module, the speech recognition module and the control module as a whole is integrated on a smart phone, and the washing machine is only provided with a communication module (such as Wifi or Bluetooth), which can communicate with the smart phone. Thus, the user can remotely control the operation of the washing machine only by inputting information (such as information of the laundry, washing requirements or special settings) into his/her smart phone. The detailed steps of acquisition, recognition, analysis and decision-making are processed online or offline by the smart phone. Here, the speech acquisition module originally existing in the smart phone may be used to acquire the speech input of the user; the speech recognition module may recognize the information inputted by the user online in the cloud or offline based on local database, and convert it into machine language; and then the control device determines an optimized mode and/or parameter based on analysis of the information recognized. Finally, via communication of the communication module in the smart phone (such as Wifi or Bluetooth) with the communication module on the washing machine, the mode and/or parameter determined is transmitted to the washing machine such that the washing machine runs according to the given mode and/or parameter. Based on this embodiment, the washing machine can be remotely controlled cost-effectively, making human-computer interaction more efficient and intelligent. Here, it should be noted that the washing machine can also send information to the smart phone through its communication module to achieve bidirectional interaction, so that the user can remotely understand the real-time state of the washing machine, thereby further improving the user experience.

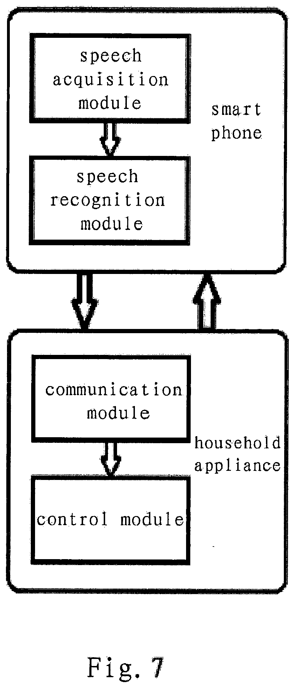

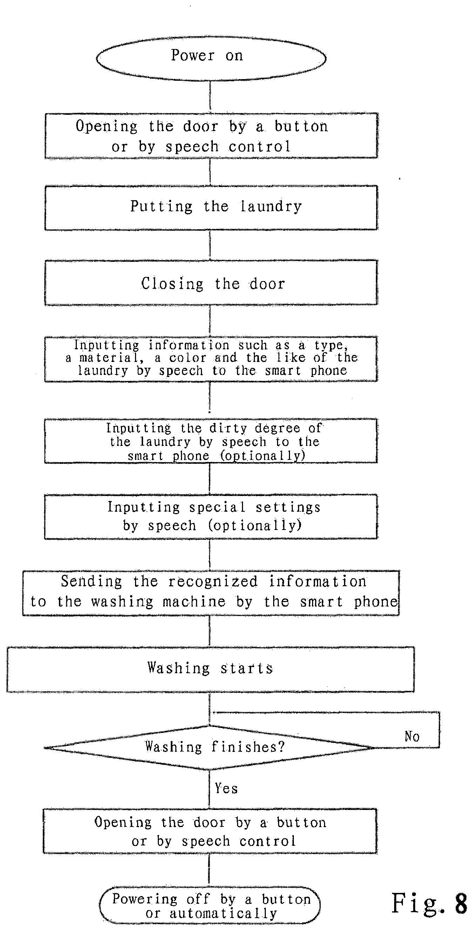

FIG. 7 shows a third schematic block diagram of the household appliance according to the present invention. FIG. 8 shows a flowchart corresponding to this embodiment. As can be seen from FIG. 7, the speech acquisition module and the speech recognition module in the speech recognition system are integrated on the smart phone, and the washing machine is equipped with the control module in the speech recognition system and a communication module (such as Wifi or Bluetooth) which can communicate with the smart phone. Here, the control module may be integrated in the central control unit of the washing machine or may also be connected to the central control unit. Here, the speech acquisition module originally existing in the smart phone may be used to acquire the speech input of the user; the speech recognition module may recognize the information input by the user online in the cloud or offline based on local database, convert it into machine language, and transmit it to the washing machine through the communication module in the smart phone; the communication module in the washing machine transmits the received information to the control module; and then the control device determines an optimized mode and/or parameter based on the analysis on the information recognized, and ultimately operates the household appliance based on the mode and/or parameter determined. Not limited to the embodiments as shown above, it is also conceivable to integrate only the speech acquisition module on the smart phone or utilize the speech acquisition module inherently in the smart phone, and to integrate the communication module, the speech recognition module and the control module on the household appliance. Here, the speech input signal acquired by the smart phone is transmitted to the speech recognition module via the communication module of the household appliance for recognizing the information of an object to be treated, based on which a mode and/or parameter for operating the household appliance is determined.

Although the exemplary embodiments of the present invention have been described, a person skilled in the art should understand that, multiple changes and modifications may be made to the exemplary embodiments without substantively departing from the spirit and scope of the present invention. Accordingly, all the changes and modifications are encompassed within the protection scope of the present invention as defined by the claims. The present invention is defined by the appended claims, and the equivalents of these claims are also contained therein.

## Claims

1. A household appliance, **characterized in that**, the household appliance is provided with a speech control system, the speech control system comprising:
a speech acquisition module configured to acquire a speech input signal, wherein the speech input signal includes a statement of an objective fact of an object to be treated;
a speech recognition module configured to recognize information of one or more objects to be treated from the speech input signal; and
a control module for determining a mode and/or parameter for operating the household appliance based on the recognized information of one or more objects to be treated.

2. The household appliance according to claim 1, **characterized in that**, the information of an object to be treated comprises at least one of the following information: a type of an object to be treated, a material of an object to be treated, a color of an object to be treated, a fading difficulty of an object to be treated, the number of an object to be treated, the mass of an object to be treated, a dirty degree of an object to be treated, and a requirement for treating an object to be treated.

3. The household appliance according to claim 1 or 2, **characterized in that**, at least one of the speech acquisition module, the speech recognition module and the control module is provided separately from the household appliance.

4. The household appliance according to claim 3, **characterized in that**, the separate module is disposed on a smart device, such as a smart phone, a tablet and a computer.

5. The household appliance according to any one of claims 1 to 4, **characterized in that**, the speech acquisition module, the speech recognition module and the control module communicate with each other in a wireless and/or a wired manner.

6. The household appliance according to any one of claims 1 to 5, **characterized in that**, the speech recognition module and/or the control module are/is on-line or off-line.

7. The household appliance according to any one of claims 1 to 6, **characterized in that**, the household appliance is a washing machine, a laundry dryer, a washer-dryer, a dishwasher, a coffee machine or an oven.

8. The household appliance according to any one of claims 1 to 7, **characterized in that**, in the case that the household appliance is a washing machine,
the recognized information of one or more objects to be treated includes at least one of the following: a type of a laundry, a material of a laundry, a color of a laundry, a fading difficulty of a laundry, the number of laundries, a requirement for washing a laundry, wherein the requirement for washing a laundry preferably includes at least one of the following: a washing duration, a washing start time, a washing end time, a running quietness degree, and a laundry disinfection degree;
the parameters include at least one of the following: a detergent dosage, a softener dosage, a water temperature, a washing rotation speed, washing time, a dewatering rotation speed, a water consumption, rinsing times;
the modes include at least one of the following: a standard mode, a soft mode, a fast wash mode, a quiet mode, an infant mode, a disinfection mode, a night mode, a mixed mode, a power mode, a rinse mode, a dewatering mode, and a soaking mode.

9. The household appliance according to any one of claims 1 to 8, **characterized in that**, in the case that the household appliance is a washing machine, the speech control system is capable of determining a mode and/or parameter for operating the washing machine according to the dirty degree of the laundry recognized.

10. The household appliance according to any one of claims 1 to 9, **characterized in that**, in the case that the household appliance is a washing machine, the speech control system is capable of determining the detergent dosage and/or the softener dosage and/or the water temperature and/or the washing rotation speed and/or the washing time and/or the dewatering rotation speed and/or the water consumption and/or the rinsing times according to the dirty degree of the laundry and/or the material of the laundry and/or the color of the laundry and/or the type of the laundry and/or the number of the laundries recognized.

11. The household appliance according to any one of claims 1 to 10, **characterized in that**, in the case that the household appliance is a washing machine, the speech control system sets the washing duration and/or the washing start time and/or the washing end time according to the recognized requirement for washing a laundry.

12. The household appliance according to any one of claims 1 to 11, **characterized in that**, the household appliance can make a confirmation or give a feedback by means of acoustic and/or optical signals.

13. A method for operating the household appliance according to any one of the claims 1 to 12, **characterized by**, comprising the steps of:
acquiring a speech input signal, wherein the speech input signal includes a statement of an objective fact of an object to be treated;
recognizing information of one or more objects to be treated from the speech input signal; and
determining a mode and/or parameter for operating the household appliance based on the recognized information of one or more objects to be treated.

14. A computer-readable storage medium having computer-readable instructions, **characterized in that**, the method according to claim 13 is capable of being implemented when the computer-readable instructions are executed on one or more computers.
